Europäisches Patentamt

European Patent Office

Office européen des brevets

(19)

(11) Veröffentlichungsnummer: **0 004 051**
A2

(12) **EUROPÄISCHE PATENTANMELDUNG**

(21) Anmeldenummer: 79100644.8

(22) Anmeldetag: 05.03.79

(51) Int. Cl.²: **F 24 J 3/02**

(30) Priorität: 06.03.78 DE 2809547

(43) Veröffentlichungstag der Anmeldung:
19.09.79 Patentblatt 79/19

(84) Benannte Vertragsstaaten:
BE CH DE FR GB IT LU NL SE

(71) Anmelder: Gutermuth, Paul
Augustastrasse 48
D-6456 Langenselbold(DE)

(84) Benannte Vertragsstaaten:
BE CH DE FR GB IT LU NL SE

(71) Anmelder: Oetjen, Heinrich
August-Bebel-Strasse 11
D-6451 Bruchköbel(DE)

(84) Benannte Vertragsstaaten:
BE CH DE FR GB IT LU NL SE

(72) Erfinder: Gutermuth, Paul
Augustastrasse 48
D-6456 Langenselbold(DE)

(72) Erfinder: Oetjen, Heinrich
August-Bebel-Strasse 11
D-6451 Bruchköbel(DE)

(74) Vertreter: Strasse, Joachim, Dipl.-Ing. et al,
Römerstrasse 19 Postfach 793
D-6450 Hanau/Main(DE)

(54) Vorrichtung zur Umwandlung von Sonnenstrahlung in Wärme.

(57) Die Erfindung bezieht sich auf eine Vorrichtung zur Umwandlung von Sonnenstrahlung in Wärme, bei der die in einem Sammler (10, 36) angeordneten Absorberelemente (16, 28, 30, 38) so ausgebildet sind, daß stets eine optimale Nutzwärmegewinnung erfolgt, ohne daß ein Ausrichten der Vorrichtung auf die einfallende Sonnenstrahlung erfolgt. Erfindungsgemäß sind dazu die Absorberelemente als drehbar angeordnete rotationssymmetrische Körper (16, 28, 30, 38) ausgebildet, die von einem Medium um- und/oder durchströmt werden. In Ausgestaltung der Erfindung kann in einem Sammler (36) ein einziges Absorberelement in Form einer drehbar angeordneten Kugel (38) angeordnet sein.

Fig.2

EP 0 004 051 A2

Vorrichtung zur Umwandlung von Sonnenstrahlung in Wärme

Die Erfindung bezieht sich auf eine Vorrichtung zur Umwandlung von Sonnenstrahlung in Wärme mit vorzugsweise nebeneinander in einem die Sonnenstrahlung durch eine Fläche hindurchlassenden wärmeisolierten Sammler angeordneten von einem Medium durch und/oder umströmten Absorberelementen.

Bei den bekannten Vorrichtungen bestehen die Absorberelemente zum Beispiel aus geschwärzten Metallplatten. Die durch die Sonnenstrahlung auftretende Wärme wird dann vorwiegend durch Konvektion an ein Medium übertragen, entweder dadurch, daß das Medium an der Metallplatte entlangströmt oder durch Kanäle geleitet wird, die in dem Absorberelement enthalten sind. Als Medium kann zum Beispiel Luft oder Wasser gewählt werden (DE-OS 2 528 267).

Auch sind Sonnenkollektoren bekannt, bei denen die Absorberelemente in Form eines Metallgewebes von einem Medium umströmt werden (US-PS 3 102 532).

Die Einsatzmöglichkeit der bekannten Vorrichtungen zur Umwandlung von Sonnenstrahlung in Wärme hängt von dem Wirkungsgrad ab, also von dem Verhältnis der von der Vorrichtung gelieferten Nutzenergie zu der auf die Auffangfläche auftreffenden Sonnenenergie. Dabei wird als Auffangfläche die Fläche bezeichnet, durch die die Strahlung in das Gehäuse auf die Absorberelemente gelangen kann.

Bei Dauerbetrieb, wenn die Austrittstemperatur des Arbeitsmittels sich zeitlich nicht ändert, ist die erzielte Nutzwärme gleich der eingestrahlten Sonnenergie abzüglich der Verluste. Diese sind vorwiegend durch Reflektion und Absoption der Gehäuseabschirmung, Wärmeabstrahlung von der Abschirmung, Wärmeabgabe durch Konvektion und Leitung im Raum zwischen Abschirmung und Absorberoberfläche bestimmt. Auch hängt der Wirkungsgrad von der Temperaturdifferenz zwischen der Absorberoberfläche und dem Medium ab. Kann man die Verluste, die im Zusammenhang mit der Gehäuseabschirmung entstehen, durch Auswahl der wärmedämmenden Stoffe der Gehäusewandungen beziehungsweise der die Sonnenstrahlung durchlassenden Fläche, die vorzugsweise ein Mehrscheibenisolierglas ist, weitgehend verringern, so bereitet die Verbesserung des Wirkungsgrades durch die Erhöhung der Temperaturdifferenz zwischen den Absorberoberflächen und dem Medium Schwierigkeiten. Der Grund ist unter anderem darin zu sehen, daß bei den Vorrichtungen mit einer Metallplatte als Absorberelement oder den von einem Medium durchströmten Rohren als Absorberelement die von der Sonnenstrahlung beaufschlagte Oberfläche im Vergleich zu der durch die Eintrittsfläche des Gehäuses hindurchtretenden Strahlungsstärke zu klein ist. Außerdem sind der Sonnenenergie stets dieselben Flächen zugewandt. Dadurch werden die Absorberelemente stark erwärmt, so daß eine weitere Sonnenenergieabsorption nur im geringen Umfang erfolgen kann. Das an den Absorberelementen vorbeiströmende Medium bewirkt zwar eine Abkühlung und damit eine Wirkungsgradverbesserung durch verstärkte Absorption der Sonnenergie, bedingt jedoch noch keine so wirtschaftliche Nutzung der bekannten Vorrichtungen, daß herkömmliche Energiearten im erheblichen Umfang gespart werden könnten.

Es ist daher Aufgabe der vorliegenden Erfindung, die eingangs beschriebene Vorrichtung derart zu verbessern, daß der Wirkungsgrad im Vergleich zu den bekannten Vorrichtungen vergrößert wird, ohne daß dazu die die Absorberelemente aufnehmenden Sammler in ihren Abmessungen verändert, also insbesondere vergrößert werden müßte. Zudem soll die auf die Absorberelemente einwirkende Strahlungsenergie nahezu unabhängig vom Einfallswinkel der Strahlung sein. Auch soll erreicht werden, daß der Sonnenstrahlung weitgehend kühle Flächen zugewandt sind, um pro Zeiteinheit möglichst viel Strahlung zu absorbieren.

Die Aufgabe wird erfindungsgemäß dadurch gelöst, daß die Absorberelemente drehbar gelagerte rotationssymmetrische Körper, vorzugsweise in Form von Kugeln oder kugelähnlichen Körpern sind. Durch die Wahl dieser Körper wird erreicht, daß die Oberfläche der die Sonnenstrahlung absorbierenden Elemente vergrößert wird, so daß dadurch die Temperaturdifferenz zwischen Medium und der Absorberfläche insgesamt vergrößert wird. Das bedeutet aber wiederum eine Erhöhung des Wirkungsgrades. Durch die drehbare Anordnung der Absorberelemente ist sichergestellt, daß die Sonnenstrahlung fortwährend auf Flächen trifft, die durch das umströmende Medium abgekühlt sind. Durch diese erfindungsgemäße Ausführung der Absorberelemente wird die Möglichkeit einer erhöhten Energieabsortion geschaffen, wodurch der Wirkungsgrad im Vergleich zu den bekannten Vorrichtungen nahezu verdoppelt wird. Durch die Form der Absorberelemente trifft die Strahlung bei jedem Stand der Sonne mit gleicher Winkelverteilung auf die Oberfläche auf. Eine gesonderte Einstellung des Sammlers auf den jeweiligen Einfallswinkel der Sonne ist im Vergleich zu den bekannten Vorrichtungen mit Absorberelementen in Form von Platten oder Metallgeweben demzufolge nicht erforderlich.

In Ausgestaltung der Erfindung können die Absorberelemente als Zylinder oder zylinderähnliche Körper ausgebildet sein, die ebenfalls drehbar gelagert sind. Dadurch ergeben sich nahezu die gleichen Vorteile, wie sie bei der erfindungsgemäßen Lehre mit den Kugeln oder kugelähnlichen Körpern erzielt werden.

0004051

- 4 -

Um eine Drehung der Absorberelemente zu erreichen, sind in Ausgestaltung der Erfindung Ausnehmungen vorgesehen, die vorzugsweise in dem Strömungsweg des Mediums angeordnet sind. Um eine Drehung der Absorberelemente ohne Lageveränderung zu ermöglichen, können zum Beispiel die kugelförmigen Absorberelemente in einem Kugelkäfig angeordnet sein oder von durch ihren Mittelpunkt hindurchgehende Achsen, deren Enden in den Gehäuswandungen befestigt sind, gehalten werden. Eine ähnliche Anordnung ist für die zylinderförmigen Körper möglich.

Gemäß der Erfindung sind die Absorberelemente vorzugsweise in einer oder mehreren Ebenen parallel oder nahezu parallel zu der die Sonnenstrahlung durchlassenden Fläche angeordnet. Bei der Anordnung der Absorberelemente in mehreren parallel zueinander verlaufenden Ebenen ergibt sich der Vorteil, daß die Wärme an das umströmende Medium besser abgegeben werden kann.

In Ausgestaltung der Erfindung kann in einer Vorrichtung zur Umwandlung von Sonnenstrahlung in Wärme mit zumindest einem in einem die Sonnenstrahlung hindurchlassenden wärmeisolierten Sammler angeordneten von einem Medium durch- und/oder umströmten rotationssymmetrischen Absorberelement in dem Sammler eine einzige Kugel drehbar angeordnet sein. Die Dimensionierung dieser Kugel muß dementsprechend groß sein, um hinreichend Energie für zum Beispiel die Erwärmung von Brauchwasser eines Einfamilienhauses zu liefern. Durch das Vorhandensein einer einzigen Kugel in dem Sammler treten insbesondere keine Schwierigkeiten der Anordnung des Sonnenkollektors auf. Es brauchen keine großflächigen Anordnungen an zum Beispiel Einfamilienhäusern angebracht zu werden. Letztes kann nämlich bewirken, daß die Eintrittsflächen für die Sonnenstrahlung unerwünschte und zu vermeidende Reflektionen hervorrufen, die zum Beispiel Anwohner oder Führer von Fahrzeugen behindern können. Bei einem Sonnenkollektor mit einer einzigen Kugel als Absorberelement ist vorzugsweise der Sammler der Form der Kugel angepasst. Er kann an windgeschützten Orten oder sogar unmittelbar auf dem Boden aufgestellt werden. Einer spezielle Ausrichtung zu der Sonnenstrahlung bedarf es nicht. Auch kann in Ausgestaltung der Zwischenraum zwischen der Kugel und dem Sammler nur teilweise mit dem umströmenden Medium gefüllt sein. In Abwandlung kann die Form des die Kugel umgebenden Sammlers ganz oder teilweise von der symmetrischen Form der Kugel abweichen.

Weitere Einzelheiten, Vorteile und Merkmale der Erfindung ergeben sich aus der nachfolgenden Beschreibung der Zeichnung.

Es zeigen:

Fig. 1    eine schematische Darstellung einer erfindungsgemäßen Vorrichtung zur Umwandlung von Sonnenstrahlung,

Fig. 2    ausschnittweise Anordnungen von Absorberelementen
         und

Fig. 3    eine Seitenansicht eines Sonnenkollektors mit
         einem einzigen Absorberelement, teilweise geschnitten.

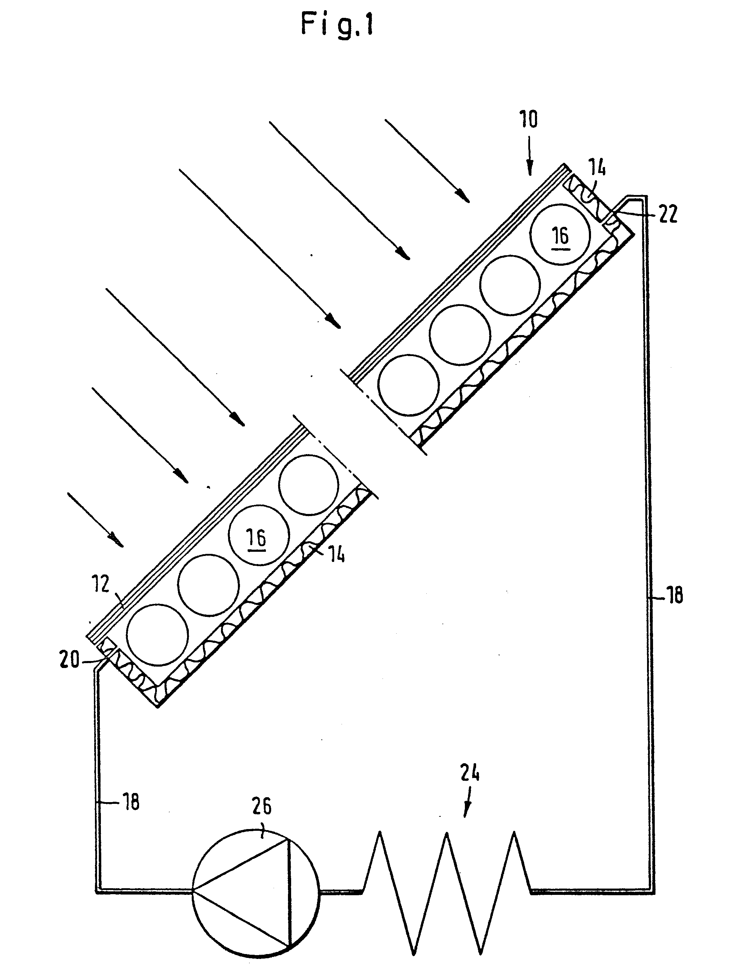

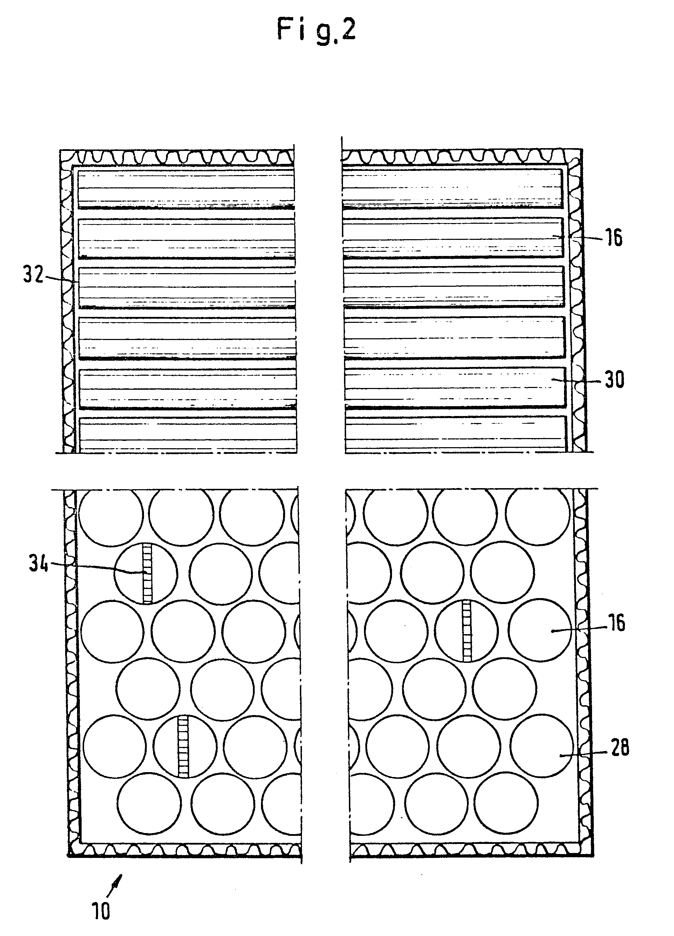

In Fig. 1 ist schematisch eine Vorrichtung zur Umwandlung von Sonnenstrahlung in Wärme wiedergegeben. Ein Sammler 10 besteht aus einem vorzugsweise quaderförmigen Gehäuse, dessen der Sonnenstrahlung zugewandte Fläche 12 zumindest für die Wärmestrahlung durchlässig ist. Vorzugsweise besteht diese Fläche aus Mehrscheibenisolierglas. Die anderen Gehäusewände 14 weisen zumindest eine wärmedämmende Innenverkleidung auf, die außerdem die auftreffende Strahlung reflektieren kann. In dem Sammler 10 sind die Strahlung absorbierenden, vorzugsweise geschwärzten Absorberelemente 16 angeordnet, die nachstehend im Zusammenhang mit der Fig. 2 näher beschrieben werden. Die durch die Absorption der Strahlung in den Absorberelementen auftretende Wärme wird an ein Medium vorwiegend durch Konvektion übertragen, das durch ein Leitungssystem 18 fließt. Das Medium tritt durch eine Öffnung 20 in den Sammler 10, um die Absorberelemente 16 zu umströmen und dadurch Wärme aufzunehmen. Das erwärmte Medium verläßt den Sammler 10 auf der der Eintrittsöffnung 20 gegenüberliegenden Seite durch eine Auslaßöffnung 22, um anschließend einem Verbraucher 24 zugeführt werden zu können. Die Umwälzung des Mediums kann zum Beispiel durch eine Pumpe 26, aber auch aufgrund der Schwerkraft erfolgen.

Die in Fig. 1 mit 16 bezeichneten Absorberelemente sind in der Fig. 2 ausschnittweise dargestellt. Auf der einen Seite sind kugelförmige Absorberelemente 28, auf der anderen Seite zylinderförmige Absorberelemente 30 wiedergegeben. Die Absorberelemente 28 sind zum Beispiel in Reihen nebeneinander angeordnet, wobei die Kugeln möglichst eng "gepackt" sind. Die in einer Reihe angeordneten Kugeln 28 können zum Beispiel durch eine gemeinsame Achse gehalten werden, damit sie drehbar gelagert sind. Auch können sie von einem Kugelkäfig aufgenommen werden, der die gleiche Aufgabe erfüllt. Die nebeneinander angeordneten Kugeln 28 können in einer Ebene gelagert sein, jedoch auch in parallel zueinander verlaufenden Ebenen vorliegen. Der Abstand zwischen den Kugeloberflächen von in einer einzigen Ebene angeordneten Absorberelementen und der Innenfläche des Mehrscheibenisolierglases sollte gering sein, so daß sich nur eine kleine Wasserschicht zwischen den Kugeln und der Innenfläche befindet. Das in den Sammler 10 kommende Medium umströmt nun die Kugeln 28 derart, daß sie gedreht werden. Dazu können Ausnehmungen, zum Beispiel Rändelungen 34 vorgesehen werden, die einen Widerstand für das Medium darstellen, so daß eine Drehung der Kugeln in einer gewünschten Geschwindigkeit ermöglicht wird.

Durch die Drehung der Absorberelemente trifft die Sonnenstrahlung stets auf durch das umströmende Medium abgekühlte Flächen, so daß pro Zeiteinheit im Vergleich zu stationär angeordneten Kugeln mehr Energie absorbiert werden kann, wodurch wiederum der Wirkungsgrad der Vorrichtung verbessert wird.

Selbst wenn die Absorberelemente 16 nicht drehbar gelagert sein sollten, würde sich im Vergleich zu den bekannten Absorbervorrichtungen eine Verbesserung des Wirkungsgrades ergeben, da nicht nur die Oberfläche des Absorbers vergrößert ist, sondern die Strahlung trifft bei jedem Stand der Sonne mit gleicher Winkelverteilung auf die Kugeloberfläche auf. Eine gesonderte Einstellung des Sammlers 10 auf den jeweiligen Einfallswinkel der Sonne ist im Vergleich zu den bekannten Vorrichtungen nicht erforderlich.

Neben der kugelförmigen Ausbildung der Absorberelemente können diese auch zylinderförmig gewählt werden, wie die Figur 2 ebenfalls zeigt. Mit dem Bezugszeichen 30 sind nebeneinander angeordnete Voll- oder Hohlzylinder bezeichnet, die von Achsen 32 drehbar gehalten werden. Damit sich die Absorberelemente 30 durch das umströmende Medium drehen, können ebenfalls Ausnehmungen an der Oberfläche angeordnet sein, wie bei den kugelförmigen Absorberelementen 28 mit den Bezugszeichen 34 angegeben ist. Die im Hinblick auf die Kugelabsorber 28 aufgezeigten Vorteile treffen selbstverständlich auch auf die zylinderförmigen Absorberelemente 30 zu. Durch das Drehen der Zylinder sind der Sonnenstrahlung stets Flächen zugwandt, die gekühlt beziehungsweise abgekühlt sind.

Hinsichtlich des Einfallswinkels der Strahlung sind die gleichen Vorteile gegeben, die im Zusammenhang mit den Kugelelementen 28 beschrieben sind. Es ist selbstverständlich, daß sich die Erfindung nicht nur auf Zylinder oder zylinderförmige beziehungsweise Kugeln oder kugelförmige Absorberelemente beschränkt. Vielmehr können nahezu sämtliche rotationssymmetrischen Körper als Absorberelemente verwendet werden.

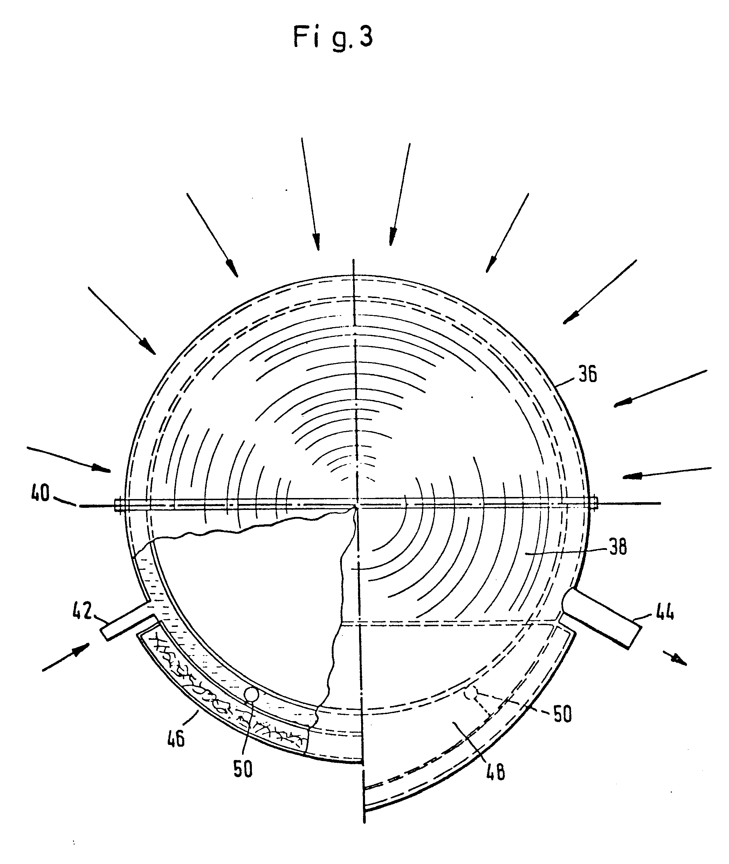

In Fig. 3 ist schematisch in Seitenansicht ein weiteres Ausführungsbeispiel einer erfindungsgemäßen Vorrichtung zur Umwandlung von Sonnenstrahlung in Wärme dargestellt. In diesem Ausführungsbeispiel wird ein einziges Absorberelement in Form einer Kugel 38 in einem Sammler 36 angeordnet, der vorzugsweise aus Mehrscheibenisolierglas besteht. Dabei ist, wie der geschnittenen Darstellung zu entnehmen ist, vorzugsweise der Sammler 36 der Kugel 38 in seiner Form angepasst und weist nur einen geringen Abstand zu dieser auf. Im Zentrum des Sammlers 36 befindet sich der Absorber in Form der Kugel 38, die um eine Achse 40 drehbar ist. Der Absorber 38 kann dabei sowohl von einem Medium durch- als auch umströmt werden. Vorzugsweise wird jedoch die Kugel 38 von einem Medium umströmt. Insbesondere muß dabei die Kugel 38 nicht vollständig von dem Medium umströmt werden, sondern kann im unteren Bereich zwischen einer Einlaßöffnung 42 und einer Auslaßöffnung 44 für das Medium entlangströmen. Um durch das umströmende Medium

0004051

ein Drehen der Kugel 38 zu bewirken, können an ihrer Oberfläche Vorsprünge oder Ausnehmungen in Form von zum Beispiel Rändelungen vorhanden sein, die einen Widerstand gegen das strömende Medium darstellen und somit ein Drehen der Kugel 38 bewirken. Wie der Figur 3 des weiteren zu entnehmen ist, wird vorzugsweise der Bereich, der nicht der direkten Sonnenstrahlung ausgesetzt ist, also der Bereich zwischen der Zuflußöffnung 42 und der Auslaßöffnung 44 von einer Isolierschicht 46 umgeben.

Des weiteren ist der Figur 3 in Teildarstellung 48 zu entnehmen, daß der Sammler zumindest in einem Bereich von der symmetrischen Form der Kugel abweicht. Dadurch ist die Möglichkeit geschaffen, daß das umströmende Medium Räume unterschiedlichen Querschnitts zwischen dem Absorber 38 und dem Sammler 36 einnehmen kann. Die Lagerung der Kugel 38 erfolgt vorzugsweise in einem Kugelkäfig auf an der Sammlerinnenwandung angebrachten Kugeln 50.

Das Ausführungsbeispiel nach Figur 3 zeigt den Vorteil, daß keine großflächigen Sonnenkollektoren zum Beispiel auf Dächern angeordnet werden müssen, die häufig zu unerwünschten Reflektionen führen. In entsprechender Dimensionierung des Sammlers 36 und der darin angeordneten Kugel 38 (Durchmesser zwischen 50 cm und 100 cm sind ohne weiteres denkbar), können auch mit einem einzigen Absorberelement hinreichend Energien gewonnen werden, um zum Beispiel ein Einfamilienhaus mit Warmwasser zu versorgen.

0004051

- 1 -

Patentansprüche:

1. Vorrichtung zur Umwandlung von Sonnenstrahlung in Wärme mit vorzugsweise nebeneinander in einem die Sonnenstrahlung durch eine Fläche hindurchlassenden wärmeisolierten Sammler angeordneten von einem Medium durch- und/oder umströmten Absorberelementen, dadurch gekennzeichnet, daß die Absorberelemente drehbar angeordnete rotationssymmetrische Körper (16, 28, 30, 38) sind.

2. Vorrichtung nach Anspruch 1, d a d u r c h  g e - k e n n z e i c h n e t , daß die drehbar angeordneten Absorberelemente Kugeln (28), kugelähnliche Körper, Zylinder (30) oder zylinderähnliche Körper sind.

3. Vorrichtung nach zumindest Anspruch 1, d a d u r c h g e k e n n z e i c h n e t , daß die Absorberelemente (16, 28, 30, 38) regelmäßig oder unregelmäßig angeordnete Ausnehmungen (34) aufweisen, die in etwa im Strömungsweg des die Absorberelemente (16, 28, 30, 38) umströmenden Mediums vorgesehen sind.

4. Vorrichtung nach Anspruch 3, d a d u r c h  g e k e n n - z e i c h n e t , daß durch die Wahl der Anordnung und die Ausgestaltung der Ausnehmungen (34) die Umdrehungsgeschwindigkeit der Absorberelemente (16, 28, 30) einstellbar ist.

5. Vorrichtung nach zumindest einem der vorhergehenden Ansprüche,
dadurch gekennzeichnet,
daß die Absorberelemente (16, 28, 30, 38) in einer oder in mehreren Ebenen parallel oder nahezu parallel zu der die Sonnenstrahlung durchlassenden Fläche (12) angeordnet sind.

6. Vorrichtung zur Umwandlung von Sonnenstrahlung in Wärme mit zumindest einem in einen die Sonnenstrahlung hindurchlassenden wärmeisolierten Sammler angeordneten von einem Medium durch- und/oder umströmten rotations-symmetrischen Absorberelement,
dadurch gekennzeichnet,
daß in dem Sammler (36) eine einzige Kugel (38) als Absorberelement drehbar angeordnet ist.

7. Vorrichtung nach Anspruch 6,
dadurch gekennzeichnet,
daß das um- oder durchströmende Medium die Kugel (38) dreht.

8. Vorrichtung nach Anspruch 6 und/oder Anspruch 7,
dadurch gekennzeichnet,
daß der Sammler (36) die Form des Absorberelements (38) aufweist und vorzugsweise diesem angepaßt ist.

9.   Vorrichtung insbesondere nach Anspruch 8,
     dadurch gekennzeichnet,
     daß bei umströmendem Medium der Zwischenraum
     zwischen der Kugel (38) und dem Sammler (36)
     nur teilweise mit dem Medium gefüllt ist.


10.  Vorrichtung nach zumindest Anspruch 6,
     dadurch gekennzeichnet,
     daß die Form des die Kugel (38) umgebenden
     Sammlers (36) ganz oder teilweise von der
     symmetrischen Form der Kugel abweicht.

0004051

# Fig.2

Fig.3